# EUROPEAN PATENT APPLICATION

(11) **EP 4 561 030 A1**
(43) Date of publication of application: **28.05.2025**
(21) Application number: 23842119.2
(22) Date of filing: 03.07.2023
(51) Int. Cl.: H04L 69/321

(54) **DATA PROCESSING METHOD AND DEVICE, AND STORAGE MEDIUM**

(30) Priority: 22.07.2022 CN 202210871103
(71) Applicant: Datang Mobile Communications Equipment Co., Ltd., Beijing 100085 (CN)
(72) Inventor: ZHAO, Yali, Beijing 100085 (CN); CHEN, Li, Beijing 100085 (CN); FU, Jing, Beijing 100085 (CN)
(74) Representative: Studio Torta S.p.A.
(86) International application number: PCT/CN2023/105603
(87) International publication number: WO 2024/017054

(57) **Abstract**

The present disclosure provides a data processing method and apparatus, and a storage medium. The method includes: receiving, by a target protocol layer, a protocol data unit PDU from a lower layer; if the number of lost PDUs in one or more associated PDUs is less than N, processing, by the target protocol layer, the associated PDUs to obtain corresponding service data units SDUs of the target protocol layer, and delivering, by the target protocol layer, the SDUs of the target protocol layer to an upper layer of the target protocol layer, where N is an integer greater than or equal to 1. Therefore, unnecessary data processing by the upper layer is avoided, and the processing efficiency is improved.

## Description

The present disclosure claims priority to Chinese Patent Application No. 202210871103.X, filed with the China National Intellectual Property Administration on July 22, 2022 and entitled "DATA PROCESSING METHOD AND APPARATUS, AND STORAGE MEDIUM", which is hereby incorporated by reference in its entirety.

### TECHNICAL FIELD

The present disclosure relates to the field of communication technologies and, in particular, to a data processing method and apparatus, and a storage medium.

### BACKGROUND

The 5G user-plane air interface protocol layers include a service data adaptation protocol (Service Data Adaptation Protocol, SDAP) layer, a packet data convergence protocol (Packet Data Convergence Protocol, PDCP) layer, a radio link layer control protocol (Radio Link Control, RLC) layer, a media access control (Media Access Control, MAC) layer, and a physical layer. During the processing of 5G air interface data, if a data packet is successfully received by a lower layer, it will be delivered to the PDCP layer in a form of a PDCP protocol data unit (Protocol Data Unit, PDU), and the PDCP layer will perform decryption, integrity check, duplicate detection and other processing on the PDCP PDU, and then deliver it to a core network.

Extended reality (eXtended Reality, XR) services are introduced into 5G systems. For an XR service, PDUs within one packet data unit set (Packet Data Unit Set, PDU set) or within a plurality of associated packet data unit sets have an association relationship. In this case, adopting the above manner will cause an upper layer to do a lot of unnecessary data processing and reduce the processing efficiency.

### SUMMARY

The present disclosure provides a data processing method and apparatus, and a storage medium, which avoid unnecessary data processing by an upper layer and improve the processing efficiency.

In a first aspect, the present disclosure provides a data processing method, including:
receiving, by a target protocol layer, a protocol data unit PDU from a lower layer;
if the number of lost PDUs in one or more associated PDUs is less than N, processing, by the target protocol layer, the associated PDUs to obtain corresponding service data units SDUs of the target protocol layer, and delivering, by the target protocol layer, the SDUs of the target protocol layer to an upper layer of the target protocol layer, where N is an integer greater than or equal to 1.

In an implementation, the target protocol layer is a packet data convergence protocol PDCP layer, and the PDU is a PDCP PDU;
or, the target protocol layer is a radio link layer control protocol RLC layer, and the PDU is an RLC PDU;
or, the target protocol layer is a media access control MAC layer, and the PDU is a MAC PDU.

In an implementation, the method further includes:
determining whether the one or more associated PDUs are lost according to indication information corresponding to the received PDU.

In an implementation, the indication information includes at least one of the following:
an identifier of a packet data unit set corresponding to the PDU;
an identifier of the PDU in a packet data unit set corresponding to the PDU;
identifiers of other packet data unit sets associated with a packet data unit set corresponding to the PDU;
a position of the PDU within a packet data unit set corresponding to the PDU; or
a position of the PDU within a plurality of packet data unit sets associated with a packet data unit set corresponding to the PDU.

In an implementation, if the target protocol layer is a PDCP layer or an RLC layer, the indication information is carried in a PDU header or a payload of the PDU.

In an implementation, if the target protocol layer is a MAC layer, the indication information is carried in downlink control information DCI, or the indication information is carried in a MAC control element MAC CE in the PDU, or the indication information is carried in a sub-header of a sub-PDU in the PDU, or the indication information is carried in a payload of a sub-PDU in the PDU.

In an implementation, the indication information is carried in the MAC CE in the PDU, and the MAC CE is carried in the PDU in a case that the PDU includes data of a logical channel LCH carrying an XR service.

In an implementation, the MAC CE is of a fixed length, and includes identification information of one LCH and indication information corresponding to the LCH.

In an implementation, the MAC CE is variable in length, and includes identification information of a plurality of LCHs and indication information corresponding to each LCH in the plurality of LCHs.

In an implementation, the method further includes:
receiving first configuration information, where the first configuration information is used to configure whether a terminal executes the data processing method, or the first configuration information is used to configure, based on an LCH, whether a terminal executes the data processing method.

In an implementation, the method further includes:
receiving second configuration information, where the second configuration information is used to configure a target protocol layer for executing the data processing method in the terminal, and the target protocol layer is one or more of a PDCP layer, an RLC layer or a MAC layer.

In a second aspect, the present disclosure provides a data processing apparatus, including a memory, a transceiver and a processor;
the memory is configured to store a computer program;
the transceiver is configured to receive and transmit data under control of the processor;
the processor is configured to read the computer program stored in the memory and perform the following operations:
   receiving, by a target protocol layer, a protocol data unit PDU from a lower layer;
   if the number of lost PDUs in one or more associated PDUs is less than N, processing, by the target protocol layer, the associated PDUs to obtain corresponding service data units SDUs of the target protocol layer, and delivering, by the target protocol layer, the SDUs of the target protocol layer to an upper layer of the target protocol layer, where N is an integer greater than or equal to 1.

In an implementation, the target protocol layer is a packet data convergence protocol PDCP layer, and the PDU is a PDCP PDU;
or, the target protocol layer is a radio link layer control protocol RLC layer, and the PDU is an RLC PDU;
or, the target protocol layer is a media access control MAC layer, and the PDU is a MAC PDU.

In an implementation, the processor is configured to perform the following operations:
determining whether the one or more associated PDUs are lost according to indication information corresponding to the received PDU.

In an implementation, the indication information includes at least one of the following:
an identifier of a packet data unit set corresponding to the PDU;
an identifier of the PDU in a packet data unit set corresponding to the PDU;
identifiers of other packet data unit sets associated with a packet data unit set corresponding to the PDU;
a position of the PDU within a packet data unit set corresponding to the PDU; or
a position of the PDU within a plurality of packet data unit sets associated with a packet data unit set corresponding to the PDU.

In an implementation, if the target protocol layer is a PDCP layer or an RLC layer, the indication information is carried in a PDU header or a payload of the PDU.

In an implementation, if the target protocol layer is a MAC layer, the indication information is carried in downlink control information DCI, or the indication information is carried in a MAC control element MAC CE in the PDU, or the indication information is carried in a sub-header of a sub-PDU in the PDU, or the indication information is carried in a payload of a sub-PDU in the PDU.

In an implementation, the indication information is carried in the MAC CE in the PDU, and the MAC CE is carried in the PDU in a case that the PDU includes data of a logical channel LCH carrying an XR service.

In an implementation, the MAC CE is of a fixed length, and includes identification information of one LCH and indication information corresponding to the LCH.

In an implementation, the MAC CE is variable in length, and includes identification information of a plurality of LCHs and indication information corresponding to each LCH in the plurality of LCHs.

In an implementation, the processor is configured to perform the following operations:
receiving first configuration information, where the first configuration information is used to configure whether to perform the operations in any one of the above, or the first configuration information is used to configure, based on an LCH, whether to perform the operations in any one of the above.

In an implementation, the processor is configured to perform:
receiving second configuration information, where the second configuration information is used to configure a target protocol layer for performing the operations in any one of the above, and the target protocol layer is one or more of a PDCP layer, an RLC layer or a MAC layer.

In a third aspect, the present disclosure provides a data processing apparatus, including:
a receiving unit, configured to receive a protocol data unit PDU from a lower layer by a target protocol layer;
a processing unit, configured to, if the number of lost PDUs in one or more associated PDUs is less than N, process the associated PDUs by the target protocol layer to obtain corresponding service data units SDUs of the target protocol layer, and deliver the SDUs of the target protocol layer by the target protocol layer to an upper layer of the target protocol layer, where N is an integer greater than or equal to 1.

In an implementation, the target protocol layer is a packet data convergence protocol PDCP layer, and the PDU is a PDCP PDU;
or, the target protocol layer is a radio link layer control protocol RLC layer, and the PDU is an RLC PDU;
or, the target protocol layer is a media access control MAC layer, and the PDU is a MAC PDU.

In an implementation, the processing unit is configured to:
determine whether the one or more associated PDUs are lost according to indication information corresponding to the received PDU.

In an implementation, the indication information includes at least one of the following:
an identifier of a packet data unit set corresponding to the PDU;
an identifier of the PDU in a packet data unit set corresponding to the PDU;
identifiers of other packet data unit sets associated with a packet data unit set corresponding to the PDU;
a position of the PDU within a packet data unit set corresponding to the PDU; or
a position of the PDU within a plurality of packet data unit sets associated with a packet data unit set corresponding to the PDU.

In an implementation, if the target protocol layer is a PDCP layer or an RLC layer, the indication information is carried in a PDU header or a payload of the PDU.

In an implementation, if the target protocol layer is a MAC layer, the indication information is carried in downlink control information DCI, or the indication information is carried in a MAC control element MAC CE in the PDU, or the indication information is carried in a sub-header of a sub-PDU in the PDU, or the indication information is carried in a payload of a sub-PDU in the PDU.

In an implementation, the indication information is carried in the MAC CE of the PDU, and the MAC CE is carried in the PDU in a case that the PDU includes data of a logical channel LCH carrying an XR service.

In an implementation, the MAC CE is of a fixed length, and includes identification information of one LCH and indication information corresponding to the LCH.

In an implementation, the MAC CE is variable in length, and includes identification information of a plurality of LCHs and indication information corresponding to each LCH in the plurality of LCHs.

In an implementation, the receiving unit is configured to:
receive first configuration information, where the first configuration information is used to configure whether to perform the operations in any one of the above, or the first configuration information is used to configure, based on an LCH, whether to perform the operations in any one of the above.

In an implementation, the receiving unit is configured to:
receive second configuration information, where the second configuration information is used to configure a target protocol layer for performing the operations in any one of the above, and the target protocol layer is one or more of a PDCP layer, an RLC layer or a MAC layer.

In a fourth aspect, the present disclosure provides a computer-readable storage medium, where the computer-readable storage medium stores a computer program for causing a computer to execute the method of the first aspect.

The present disclosure provides the data processing method and apparatus, and the storage medium. In this method, the target protocol layer adopts integrated processing on the associated PDUs, and only when the associated PDUs are not lost in large quantities will they be processed into the corresponding SDUs and delivered to the upper layer, thus avoiding unnecessary data processing by the upper layer and improving the processing efficiency.

It should be understood that what is described in the above Summary part is not intended to define key or important features of embodiments of the present invention, nor is it intended to limit the scope of the present invention. Other features of the present invention will be readily understood from the following description.

### BRIEF DESCRIPTION OF DRAWINGS

In order to explain the technical solutions in the present disclosure or in the prior art more clearly, the drawings needed to be used in the description of the embodiments or the prior art will be briefly introduced below. Obviously, the drawings in the following description are some embodiments of the present invention, and for those skilled in the art, other drawings can be obtained according to these drawings without paying creative efforts.
FIG. 1 is a schematic diagram of a data frame of an XR service.
FIG. 2 is a 5G user-plane air interface protocol stack.
FIG. 3 is a schematic flowchart of a data processing method provided by an embodiment of the present disclosure.
FIG. 4 is a first schematic structural diagram of a data processing apparatus provided by an embodiment of the present disclosure.
FIG. 5 is a second schematic structural diagram of a data processing apparatus provided by an embodiment of the present disclosure.

### DESCRIPTION OF EMBODIMENTS

The term "and/or" in the present disclosure describes an association relationship between associated objects, and represents that there may exist three relationships. For example, A and/or B may represent three cases: A exists separately, A and B exist simultaneously, and B exists separately. The character "/" generally indicates an "or" relationship between the associated objects before and after the character. The term "a plurality of" in the embodiments of the present disclosure refers to two or more, and other quantifiers are similar thereto.

The following clearly and comprehensively describes technical solutions in the embodiments of the present disclosure with reference to the accompanying drawings in the embodiments of the present disclosure. Apparently, the described embodiments are merely a part rather than all of the embodiments of the present disclosure. Other embodiments obtained by a person of ordinary skill in the art based on the embodiments of the present disclosure without paying creative efforts shall fall within the scope of protection of the present disclosure.

The embodiments of the present disclosure provide a data processing method and apparatus, thus avoiding unnecessary data processing by an upper layer and improving the processing efficiency. Here, the method and the apparatus are based on the same application concept. Since the principles of solving problems are similar for the method and the apparatus, reference can be made to each other for the embodiments of the apparatus and the method, and the same parts will not be described again.

The technical solutions provided by the embodiments of the present disclosure may be applicable to various systems, and in particular, to a 5G system. For example, an applicable system may be a global system of mobile communication (global system of mobile communication, GSM), a code division multiple access (code division multiple access, CDMA) system, a wideband code division multiple access (Wideband Code Division Multiple Access, WCDMA) general packet radio service (general packet radio service, GPRS) system, a long term evolution (long term evolution, LTE) system, an LTE frequency division duplex (frequency division duplex, FDD) system, an LTE time division duplex (time division duplex, TDD) system, a long term evolution advanced (long term evolution advanced, LTE-A) system, a universal mobile telecommunication system (universal mobile telecommunication system, UMTS), a worldwide interoperability for microwave access (worldwide interoperability for microwave access, WiMAX) system, a 5G new radio (New Radio, NR) system, etc. The various systems all include terminal devices and network devices, and may further include core network parts, such as an evolved packet system (Evolved Packet System, EPS), a 5G system (5GS), etc.

A terminal device involved in the embodiments of the present disclosure may refer to a device that provides voice and/or data connectivity to users, a handheld device with wireless connection functions, or other processing devices connected to a wireless modem, etc. In different systems, the name of the terminal device may be different. For example, in a 5G system, the terminal device may be called a user equipment (User Equipment, UE). A wireless terminal device can communicate with one or more core networks (Core Networks, CNs) via a radio access network (Radio Access Network, RAN). The wireless terminal device may be a mobile terminal device, such as a mobile phone (or "cellular" phone) and a computer with a mobile terminal device, such as a portable, pocket-sized, handheld, computer-built or vehicle-mounted mobile apparatus, which exchanges voice and/or data with the radio access network. For example, it may be a device such as a personal communication service (Personal Communication Service, PCS) phone, a cordless phone, a session initiated protocol (Session Initiated Protocol, SIP) phone, a wireless local loop (Wireless Local Loop, WLL) station, a personal digital assistant (Personal Digital Assistant, PDA), etc. The wireless terminal device may also be called a system, a subscriber unit (subscriber unit), a subscriber station (subscriber station), a mobile station (mobile station), a mobile (mobile), a remote station (remote station), an access point (access point), a remote terminal (remote terminal), an access terminal device (access terminal), a user terminal device (user terminal), a user agent (user agent) or a user device (user device), which is not limited in the embodiments of the present disclosure.

A network device involved in the embodiments of the present disclosure may be a base station, which may include a plurality of cells providing services for a terminal. According to different specific application scenarios, a base station may also be called an access point, or it may be a device in an access network that communicates with a wireless terminal device through one or more sectors over the air interface, or has other names. The network device can be used to exchange the received air frames with Internet Protocol (Internet Protocol, IP) packets, and act as a router between the wireless terminal device and the rest of the access network, where the rest of the access network may include an Internet Protocol (IP) communication network. The network device can also coordinate the attribute management of the air interface. For example, the network device involved in the embodiments of the present disclosure may be a network device (Base Transceiver Station, BTS) in a global system for mobile communications (Global System for Mobile communications, GSM) or a code division multiple access (Code Division Multiple Access, CDMA), or a network device (NodeB) in a wide-band code division multiple access (Wide-band Code Division Multiple Access, WCDMA), or an evolutional network device (evolutional Node B, eNB or e-NodeB) in a long term evolution (long term evolution, LTE) system, or a 5G base station (gNB) in a 5G network architecture (next generation system), or a home evolved base station (Home evolved Node B, HeNB), a relay node (relay node), a home base station (femto), a pico base station (pico), etc., which is not limited in the embodiments of the present disclosure. In some network structures, a network device may include a centralized unit (centralized unit, CU) node and a distributed unit (distributed unit, DU) node, where the centralized unit and the distributed unit may also be geographically separated.

XR services are introduced into 3GPP 5G systems. The XR services can be divided into the following categories: augmented reality (Augmented Reality, AR): integrating the real world and a virtual world seamlessly; virtual reality (Virtual Reality, VR): generating a virtual world by utilizing device simulation; mixed reality (Mixed Reality, MR): containing both real physical entities and virtual information.

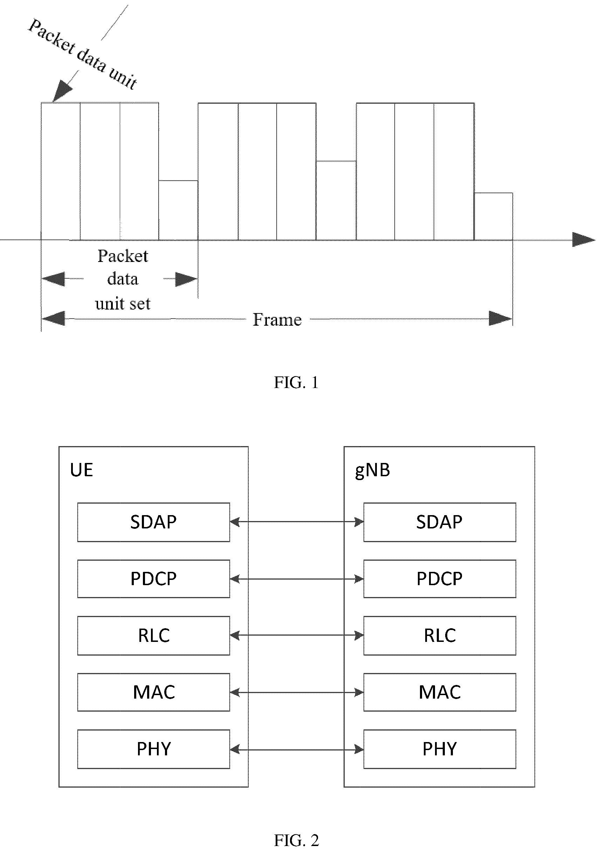

An XR service is modeled according to data frames (frames), as shown in FIG. 1, and the data is transmitted in the form of packet data unit sets (Packet Data Unit Sets, PDU sets). A so-called packet data unit set is a set of one or more packet data units corresponding to a same one information unit (such as one data frame). The packet data units within the packet data unit set are associated, and different packet data unit sets may also be associated.

As shown in FIG. 2, a 5G user-plane air interface protocol stack is shown. For a transmitting side, after a quality of service flow (QoS flow) reaches an SDAP layer, the SDAP layer will map the QoS flow to a data radio bearer (Data Radio Bearer, DRB) so as to form an SDAP PDU after the mapping, and delivers it to a PDCP layer. The SDAP PDU is a PDCP service data unit (Service Data Unit, SDU). The PDCP layer performs header compression, encryption and other operations on the PDCP SDU to form a PDCP PDU and deliver it to an RLC layer. Then the RLC layer encapsulates the RLC PDU according to scheduling information of a MAC layer and delivers it to the MAC layer. The MAC layer encapsulates the received RLC PDU into a MAC PDU and then delivers it to a physical (PHY) layer for transmission.

For a receiving side, data is received from a MAC layer, and the MAC layer decodes a received hybrid automatic repeat request (Hybrid Automatic Repeat reQuest, HARQ) process. If the decoding is correct, the data will be delivered to be demultiplexed, and an RLC PDU will be generated and delivered to an RLC layer. After receiving the RLC PDU from the MAC layer, the RLC layer removes the RLC header to obtain an RLC SDU by reassembly (that is, a PDCP PDU) and deliver it to a PDCP layer. The PDCP layer performs decryption, integrity check and duplicate detection on the PDCP PDU, and delivers it to an upper layer.

According to the above data processing method, if a data packet is successfully received by the lower layer, it will be delivered to the PDCP layer in the form of a PDCP PDU, and the PDCP layer will perform decryption, integrity check, duplicate detection and other processing on the PDCP PDU, and then deliver it to the core network. However, for the XR service, the packet data units within one packet data unit set or within a plurality of associated packet data unit sets have an association relationship. If a large quantity of packet data units in the packet data units having the association relationship are lost, it is completely unnecessary to deliver the remaining part of the packet data units to the upper layer, which instead, will increase a lot of unnecessary processing for the upper layer and reduce the processing efficiency.

For this reason, the embodiments of the present disclosure propose to adopt integrated processing on PDUs within one packet data unit set or within a plurality of packet data unit sets having an association relationship for a terminal or a base station receiving data, that is, only when the PDUs having the association relationship are not lost in large quantities will the corresponding SDUs be delivered to an upper layer, thus avoiding unnecessary data processing by the upper layer and improving the processing efficiency.

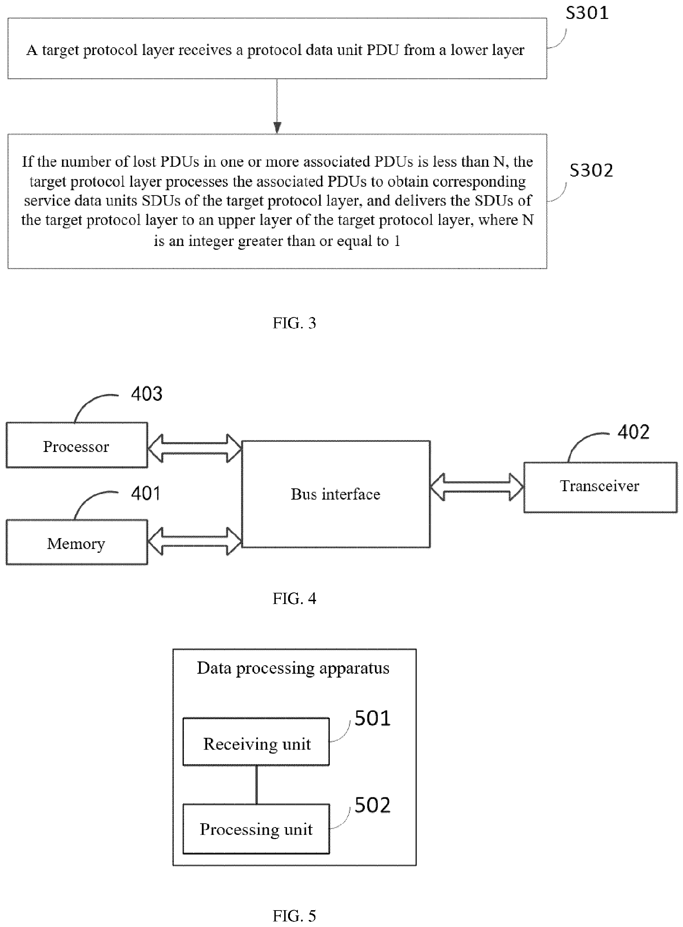

FIG. 3 is a schematic flowchart of a data processing method provided by an embodiment of the present disclosure. The method may be uplink or downlink, that is, the method may be applied to a terminal or a base station. As shown in FIG. 3, the method includes the following steps.

S301: a target protocol layer receives a PDU from a lower layer.

S302: if the number of lost PDUs in one or more associated PDUs is less than N, the target protocol layer processes the associated PDUs to obtain corresponding service data units SDUs of the target protocol layer, and delivers the SDUs of the target protocol layer to an upper layer of the target protocol layer, where N is an integer greater than or equal to 1.

In this embodiment, the target protocol layer executing the data processing method may be a PDCP layer, an RLC layer or a MAC layer. When the target protocol layer is the PDCP layer, S301 means that the PDCP layer receives a PDCP PDU from a lower layer (RLC layer). When the target protocol layer is the RLC layer, S301 means that the RLC layer receives an RLC PDU from a lower layer (MAC layer). When the target protocol layer is the MAC layer, S301 means that the MAC layer receives a MAC PDU from the lower layer (physical layer).

Optionally, the target protocol layer determines whether one or more associated PDUs are lost according to indication information corresponding to the received PDU. Optionally, if the target protocol layer is the PDCP layer or the RLC layer, the indication information is carried in a PDU header or a payload of the PDU. Optionally, if the target protocol layer is the MAC layer, the indication information is carried in downlink control information (Downlink Control Information, DCI), or the indication information is carried in a MAC control element (Control Element, CE) in the PDU, or the indication information is carried in a sub-header of a sub-PDU in the PDU, or the indication information is carried in a payload of a sub-PDU in the PDU.

Optionally, the indication information includes at least one of the following: an identifier of a packet data unit set corresponding to the PDU, such as the number of the packet data unit set; an identifier of the PDU in the packet data unit set corresponding to the PDU, such as the number of the PDU within the packet data unit set; identifiers of other packet data unit sets associated with the packet data unit set corresponding to the PDU; a position of the PDU within the packet data unit set corresponding to the PDU, such as a bit position, which may be represented by head, middle, tail, or represented by specific bit values; or a position of the PDU within a plurality of packet data unit sets associated with the packet data unit set corresponding to the PDU.

Exemplarily, the target protocol layer can determine PDUs associated with the received PDU according to the identifier of the packet data unit set corresponding to the received PDU and the identifier of the received PDU in the packet data unit set corresponding to the PDU. In other words, whether the associated PDUs are successfully received can be determined, that is, whether there is a lost PDU can be determined. Exemplarily, the target protocol layer can determine whether the PDUs associated with the received PDU are successfully received, that is, whether there is a lost PDU, according to the bit position of the received PDU in the corresponding packet data unit set. If the number of lost PDUs in the associated PDUs is less than N, for example, N is 1 or 2, the PDUs are processed to obtain corresponding SDUs of the target protocol layer, which are delivered to the upper layer. Accordingly, if the number of lost PDUs in the associated PDUs is greater than or equal to N, the target protocol layer discards the received associated PDUs.

In the data processing method in the embodiments of the present disclosure, the target protocol layer adopts integrated processing on the associated PDUs, and only when the associated PDUs are not lost in large quantities will they be processed into the corresponding SDUs and delivered to the upper layer, thus avoiding unnecessary data processing by the upper layer and improving the processing efficiency.

It should be noted that when the method is applied to the terminal, whether the terminal executes the above data processing method, that is, whether to adopt the integrated processing on the associated PDUs, may be configured by the base station or determined by the terminal itself. The target protocol layer executing the above data processing method in the terminal may be configured by the base station or determined by the terminal itself.

Optionally, the terminal receives first configuration information. The first configuration information is used to configure whether the terminal executes the data processing method. Or, the first configuration information is used to configure, based on a logical channel (LCH), whether the terminal executes the data processing method, that is, whether the terminal executes the data processing method may be configured according to the LCH, and the configuration of different LCHs may be different.

Optionally, the terminal receives second configuration information. The second configuration information is used to configure the target protocol layer for executing the data processing method in the terminal, and the target protocol layer is one or more of the PDCP layer, the RLC layer or the MAC layer. Optionally, if there are a plurality of target protocol layers configured in the second configuration information, the terminal can determine a target protocol layer for executing the data processing method from the plurality of configured target protocol layers by itself. The second configuration information and the first configuration information may be carried in a same configuration message or in different configuration messages.

The processing procedures of different target protocol layers are described below respectively.

In an implementation, the target protocol layer is the PDCP layer, and the terminal performs the following data processing procedure.

Step 1: receiving configuration information.

The terminal receives first configuration information and second configuration information from the network device, where the first configuration information indicates to the terminal to perform integrated processing on associated PDUs, and the second configuration information indicates that the target protocol layer is the PDCP layer.

Step 2: the PDCP layer receives a PDCP PDU from the RLC layer.

Step 3: the PDCP layer determines whether associated PDCP PDUs are successfully received, according to indication information carried in a PDU header or a payload of the PDCP PDU. If all of them are successfully received or the number of lost PDCP PDUs is less than N, the PDCP layer performs operations such as PDCP header removing, decryption, integrity check on the associated PDCP PDUs, respectively, and delivers them to the upper layer. If N or more PDCP PDUs in the associated PDCP PDUs are lost, the received associated PDCP PDUs are directly discarded.

Optionally, the PDCP layer may sort the received PDCP PDUs, and if N or more PDCP PDUs are lost within the sorting window, the received associated PDCP PDUs are directly discarded.

In the data processing method of this embodiment, the PDCP layer adopts integrated processing on the associated PDCP PDUs received from the RLC layer, and only when the associated PDCP PDUs are not lost in large quantities will they be processed into the corresponding PDCP SDUs and delivered to the upper layer, thus avoiding unnecessary data processing by the upper layer and improving the processing efficiency.

In another implementation, the target protocol layer is the RLC layer, and the terminal performs the following data processing procedure.

Step 1: receiving configuration information.

The terminal receives first configuration information and second configuration information from the network device, where the first configuration information indicates to the terminal to perform integrated processing on associated PDUs, and the second configuration information indicates that the target protocol layer is the RLC layer.

Step 2: the RLC layer receives an RLC PDU from the MAC layer.

Step 3: the RLC layer determines whether associated RLC PDUs are successfully received, according to indication information carried in a PDU header or a payload of the RLC PDU. If all of them are successfully received or the number of lost RLC PDUs is less than N, the RLC layer performs operations such as RLC header removing, RLC SDU reassembly on the associated RLC PDUs, respectively, and delivers them to the PDCP layer. If N or more RLC PDUs in the associated RLC PDUs are lost, the received associated RLC PDUs are directly discarded.

Optionally, the RLC layer may sort the received RLC PDUs, and if N or more RLC PDUs are lost within the sorting window, the received associated RLC PDUs are directly discarded.

In the data processing method of this embodiment, the RLC layer adopts integrated processing on the associated RLC PDUs received from the MAC layer, and only when the associated RLC PDUs are not lost in large quantities will they be processed into the corresponding RLC SDUs and delivered to the upper layer, thus avoiding unnecessary data processing by the upper layer and improving the processing efficiency.

In another implementation, the target protocol layer is the MAC layer, and the terminal performs the following data processing procedures.

Step 1: receiving configuration information.

The terminal receives first configuration information and second configuration information from the network device, where the first configuration information indicates to the terminal to perform integrated processing on associated PDUs, and the second configuration information indicates that the target protocol layer is the MAC layer.

Step 2: the MAC layer receives a MAC PDU from the physical layer.

Step 3: the MAC layer determines whether associated MAC subPDUs are successfully received according to indication information carried in DCI, or indication information carried in a sub-header or a payload of a sub-PDU (MAC subPDU) in the MAC PDU, or indication information carried in a MAC CE of the MAC PDU. If all of them are successfully received or the number of lost MAC subPDUs is less than N, the MAC layer performs operations such as multiplexing/demultiplexing on associated MAC PDUs and delivers them to the RLC layer. If N or more MAC subPDUs in the associated MAC subPDUs are lost, the received associated MAC PDUs are directly discarded.

Optionally, the indication information is carried in the MAC CE of the MAC PDU, and the MAC CE is carried in the MAC PDU in a case that the MAC PDU contains data of an LCH carrying an XR service.

Optionally, the MAC CE is of the fixed length, and contains identification information of one LCH and indication information corresponding to the LCH. Optionally, the MAC CE is variable in length, and contains identification information of a plurality of LCHs and indication information corresponding to each LCH in the plurality of LCHs.

In the data processing method of this embodiment, the MAC layer adopts integrated processing on the associated MAC PDUs received from the physical layer, and only when the associated MAC PDUs are not lost in large quantities will they be processed into the corresponding MAC SDUs and delivered to the upper layer, thus avoiding unnecessary data processing by the upper layer and improving the processing efficiency.

FIG. 4 is a first schematic structural diagram of a data processing apparatus provided by an embodiment of the present disclosure. The data processing apparatus may be a terminal or a base station. As shown in FIG. 4, the data processing apparatus includes a memory 401, a transceiver 402 and a processor 403;
the memory 401 is configured to store a computer program;
the transceiver 402 is configured to receive and transmit data under control of the processor;
the processor 403 is configured to read the computer program stored in the memory and perform the following operations:
   receiving, by a target protocol layer, a protocol data unit PDU from a lower layer;
   if the number of lost PDUs in one or more associated PDUs is less than N, processing, by the target protocol layer, the associated PDUs to obtain corresponding service data units SDUs of the target protocol layer, and delivering, by the target protocol layer, the SDUs of the target protocol layer to an upper layer of the target protocol layer, where N is an integer greater than or equal to 1.

In an implementation, the target protocol layer is a packet data convergence protocol PDCP layer, and the PDU is a PDCP PDU;
or, the target protocol layer is a radio link layer control protocol RLC layer, and the PDU is an RLC PDU;
or, the target protocol layer is a media access control MAC layer, and the PDU is a MAC PDU.

In an implementation, the processor 403 is configured to perform the following operations:
determining whether the one or more associated PDUs are lost according to indication information corresponding to the received PDU.

In an implementation, the indication information includes at least one of the following:
an identifier of a packet data unit set corresponding to the PDU;
an identifier of the PDU in a packet data unit set corresponding to the PDU;
identifiers of other packet data unit sets associated with a packet data unit set corresponding to the PDU;
a position of the PDU within a packet data unit set corresponding to the PDU; or
a position of the PDU within a plurality of packet data unit sets associated with a packet data unit set corresponding to the PDU.

In an implementation, if the target protocol layer is a PDCP layer or an RLC layer, the indication information is carried in a PDU header or a payload of the PDU.

In an implementation, if the target protocol layer is a MAC layer, the indication information is carried in downlink control information DCI, or the indication information is carried in a MAC control element MAC CE in the PDU, or the indication information is carried in a sub-header of a sub-PDU in the PDU, or the indication information is carried in a payload of a sub-PDU in the PDU.

In an implementation, the indication information is carried in the MAC CE in the PDU, and the MAC CE is carried in the PDU in a case that the PDU includes data of a logical channel LCH carrying an XR service.

In an implementation, the MAC CE is of a fixed length, and includes identification information of one LCH and indication information corresponding to the LCH.

In an implementation, the MAC CE is variable in length, and includes identification information of a plurality of LCHs and indication information corresponding to each LCH in the plurality of LCHs.

In an implementation, the processor 403 is configured to perform the following operations:
receiving first configuration information, where the first configuration information is used to configure whether to perform the operations in any one of the above, or the first configuration information is used to configure, based on an LCH, whether to perform the operations in any one of the above.

In an implementation, the processor 403 is configured to perform:
receiving second configuration information, where the second configuration information is used to configure a target protocol layer for performing the operations in any one of the above, and the target protocol layer is one or more of a PDCP layer, an RLC layer or a MAC layer.

In FIG. 4, a bus architecture may include any number of interconnected buses and bridges. Specifically, various circuits of one or more processors represented by the processor 403 and a memory represented by the memory 401 are linked together. The bus architecture may also link various kinds of other circuits, such as peripheral devices, voltage regulators and power management circuits, which is common knowledge in the prior art, and thus will not be further described here. A bus interface provides an interface. The transceiver 402 may be a plurality of elements, that is, including a transmitter and a receiver, and provide a unit for communicating with various kinds of other apparatuses on transmission mediums. These transmission mediums include transmission mediums such as wireless channels, wired channels, optical cables, etc. For different user equipments, a user interface may also be an interface capable of internally and/or externally connecting a required device, and the connected device includes but is not limited to a keypad, a display, a speaker, a microphone, a joystick, etc.

The processor 403 is responsible for managing the bus architecture and general processing, and the memory 401 can store data which is used by the processor 403 when performing operations.

Optionally, the processor 403 may be a CPU (central processing unit), an ASIC (Application Specific Integrated Circuit, application specific integrated circuit), an FPGA (Field-Programmable Gate Array, field-programmable gate array) or a CPLD (Complex Programmable Logic Device, complex programmable logic device), and the processor may also adopt a multi-core architecture.

The processor 403 is configured to execute any method provided by the embodiments of the present disclosure according to obtained executable instructions by calling the computer program stored in the memory 401. The processor 403 and the memory 401 may also be physically separated.

It should be noted that, the foregoing apparatus provided by the present disclosure can implement all method steps implemented by the terminal or the base station in the foregoing method embodiments, and can achieve the same technical effects. The parts and beneficial effects of the embodiments that are the same as those of the method embodiments are not described here again.

FIG. 5 is a second schematic structural diagram of a data processing apparatus provided by an embodiment of the present disclosure. The data processing apparatus may be a terminal or a base station. As shown in FIG. 5, the data processing apparatus includes:
a receiving unit 501, configured to receive a protocol data unit PDU from a lower layer by a target protocol layer;
a processing unit 502, configured to, if the number of lost PDUs in one or more associated PDUs is less than N, process the associated PDUs by the target protocol layer to obtain corresponding service data units SDUs of the target protocol layer, and deliver the SDUs of the target protocol layer by the target protocol layer to an upper layer of the target protocol layer, where N is an integer greater than or equal to 1.

In an implementation, the target protocol layer is a packet data convergence protocol PDCP layer, and the PDU is a PDCP PDU;
or, the target protocol layer is a radio link layer control protocol RLC layer, and the PDU is an RLC PDU;
or, the target protocol layer is a media access control MAC layer, and the PDU is a MAC PDU.

In an implementation, the processing unit 502 is configured to:
determine whether the one or more associated PDUs are lost according to indication information corresponding to the received PDU.

In an implementation, the indication information includes at least one of the following:
an identifier of a packet data unit set corresponding to the PDU;
an identifier of the PDU in a packet data unit set corresponding to the PDU;
identifiers of other packet data unit sets associated with a packet data unit set corresponding to the PDU;
a position of the PDU within a packet data unit set corresponding to the PDU; or
a position of the PDU within a plurality of packet data unit sets associated with a packet data unit set corresponding to the PDU.

In an implementation, if the target protocol layer is a PDCP layer or an RLC layer, the indication information is carried in a PDU header or a payload of the PDU.

In an implementation, if the target protocol layer is a MAC layer, the indication information is carried in downlink control information DCI, or the indication information is carried in a MAC control element MAC CE in the PDU, or the indication information is carried in a sub-header of a sub-PDU in the PDU, or the indication information is carried in a payload of a sub-PDU in the PDU.

In an implementation, the indication information is carried in the MAC CE in the PDU, and the MAC CE is carried in the PDU in a case that the PDU includes data of a logical channel LCH carrying an XR service.

In an implementation, the MAC CE is of a fixed length, and includes identification information of one LCH and indication information corresponding to the LCH.

In an implementation, the MAC CE is variable in length, and includes identification information of a plurality of LCHs and indication information corresponding to each LCH in the plurality of LCHs.

In an implementation, the receiving unit 501 is configured to:
receive first configuration information, where the first configuration information is used to configure whether to perform the operations in any one of the above, or the first configuration information is used to configure, based on an LCH, whether to perform the operations in any one of the above.

In an implementation, the receiving unit 501 is configured to:
receive second configuration information, where the second configuration information is used to configure a target protocol layer for performing the operations in any one of the above, and the target protocol layer is one or more of a PDCP layer, an RLC layer or a MAC layer.

It should be noted that, the foregoing apparatus provided by the present disclosure can implement all method steps implemented by the terminal or the base station in the foregoing method embodiments, and can achieve the same technical effects. The parts and beneficial effects of the embodiments that are the same as those of the method embodiments are not described here again.

It should be noted that the division of units in the embodiments of the present disclosure is schematic and is merely logical function division, and there may be other division manners in actual implementations. In addition, various functional units in the embodiments of the present disclosure may be integrated into one processing unit, or each of the units may physically exist alone, or two or more units are integrated into one unit. The integrated unit may be implemented in a form of hardware, and may also be implemented in a form of a software functional unit.

If the above integrated unit is implemented in the form of the software functional unit and sold or used as an independent product, it may be stored in a processor-readable storage medium. Based on such understanding, a technical solution of the present disclosure essentially, or the part contributing to the prior art, or all or a part of the technical solution may be implemented in a form of a software product. The computer software product is stored in a storage medium and includes several instructions for causing a computer device (which may be a personal computer, a server, or a network device, etc.) or a processor (processor) to execute all or part of the steps of the methods described in the embodiments of the present disclosure. The foregoing storage medium includes: various mediums that can store program codes, such as a Universal Serial Bus flash disk, a mobile hard disk, a read-only memory (Read-Only Memory, ROM), a random access memory (Random Access Memory, RAM), a magnetic disk, or an optical disk, etc.

The present disclosure also provides a computer-readable storage medium, where the computer-readable storage medium stores a computer program for causing a computer to execute the method implemented by the terminal or the network device in the foregoing method embodiments.

The computer-readable storage medium may be any available medium or data storage device that can be accessed by a computer, including but not limited to a magnetic memory (such as a floppy disk, a hard disk, a magnetic tape, a magnetooptical disk (MO), etc.), an optical memory (such as a CD, a DVD, a BD, an HVD, etc.), and a semiconductor memory (such as a ROM, an EPROM, an EEPROM, a nonvolatile memory (NAND FLASH), a solid state disk (SSD)), etc.

The present disclosure also provides a computer program product including a computer program, where when the computer program is executed by a processor, the method implemented by the terminal or the network device in the foregoing method embodiments is implemented.

A person skilled in the art shall understand that, the embodiments of the present disclosure can be provided as a method, a system or a computer program product. Therefore, the present disclosure may adopt the form of an entirely hardware embodiment, an entirely software embodiment, or an embodiment combining software and hardware. Furthermore, the present disclosure may adopt the form of a computer program product implemented on one or more computer-usable storage mediums (including but not limited to a magnetic disk memory, an optical memory, and the like) containing computer-usable program codes.

The present disclosure is described with reference to the flowcharts and/or block diagrams of the methods, devices (systems) and computer program products according to the embodiments of the present disclosure. It should be understood that, each process and/or block in the flowcharts and/or block diagrams, as well as combinations of processes and/or blocks in the flowcharts and/or block diagrams, can be implemented by computer-executable instructions. The computer-executable instructions may be provided to a processor of a general-purpose computer, a special-purpose computer, an embedded processor or other programmable data processing devices to produce a machine, which causes instructions executed by the processor of the computer or other programmable data processing devices to generate an apparatus for implementing functions specified in one or more processes in the flowcharts and/or one or more blocks in the block diagrams.

These processor-executable instructions may also be stored in a processor-readable memory that can direct a computer or other programmable data processing devices to operate in a particular manner, so that the instructions stored in the processor-readable memory generate an article of manufacture including an instruction apparatus. The instruction apparatus implements functions specified in one or more processes in the flowcharts and/or one or more blocks in the block diagrams.

These processor-executable instructions may also be loaded into a computer or other programmable data processing devices, so that a series of operational steps are performed on the computer or other programmable devices to generate computer-implemented processing. Thus, the instructions executed on the computer or other programmable devices provide steps for implementing the functions specified in one or more processes in the flowcharts and/or one or more blocks in the block diagrams.

Obviously, a person skilled in the art can make various modifications and variations to the present disclosure without departing from the spirit and scope of the present disclosure. As such, if these modifications and variations of the present disclosure belong to the scope of the claims of the present disclosure and their equivalents, the present disclosure is intended to include these modifications and variations.

## Claims

1. A data processing method, **characterized by** comprising:
receiving, by a target protocol layer, a protocol data unit PDU from a lower layer;
if the number of lost PDUs in one or more associated PDUs is less than N, processing, by the target protocol layer, the associated PDUs to obtain corresponding service data units SDUs of the target protocol layer, and delivering, by the target protocol layer, the SDUs of the target protocol layer to an upper layer of the target protocol layer, wherein N is an integer greater than or equal to 1.

2. The method according to claim 1, wherein,
the target protocol layer is a packet data convergence protocol PDCP layer, and the PDU is a PDCP PDU;
or, the target protocol layer is a radio link layer control protocol RLC layer, and the PDU is an RLC PDU;
or, the target protocol layer is a media access control MAC layer, and the PDU is a MAC PDU.

3. The method according to claim 1, further comprising:
determining whether the one or more associated PDUs are lost according to indication information corresponding to the received PDU.

4. The method according to claim 3, wherein the indication information comprises at least one of the following:
an identifier of a packet data unit set corresponding to the PDU;
an identifier of the PDU in a packet data unit set corresponding to the PDU;
identifiers of other packet data unit sets associated with a packet data unit set corresponding to the PDU;
a position of the PDU within a packet data unit set corresponding to the PDU; or
a position of the PDU within a plurality of packet data unit sets associated with a packet data unit set corresponding to the PDU.

5. The method according to claim 3, wherein if the target protocol layer is a PDCP layer or an RLC layer, the indication information is carried in a PDU header or a payload of the PDU.

6. The method according to claim 3, wherein if the target protocol layer is a MAC layer, the indication information is carried in downlink control information DCI, or the indication information is carried in a MAC control unit MAC CE in the PDU, or the indication information is carried in a sub-header of a sub-PDU in the PDU, or the indication information is carried in a payload of a sub-PDU in the PDU.

7. The method according to claim 6, wherein the indication information is carried in the MAC CE in the PDU, and the MAC CE is carried in the PDU in a case that the PDU comprises data of a logical channel LCH carrying an XR service.

8. The method according to claim 6, wherein the MAC CE is of a fixed length, and comprises identification information of one LCH and indication information corresponding to the LCH.

9. The method according to claim 6, wherein the MAC CE is variable in length, and comprises identification information of a plurality of LCHs and indication information corresponding to each LCH in the plurality of LCHs.

10. The method according to any one of claims 1 to 9, comprising:
receiving first configuration information, wherein the first configuration information is used to configure whether a terminal executes the data processing method, or the first configuration information is used to configure, based on an LCH, whether a terminal executes the data processing method.

11. The method according to claim 10, comprising:
receiving second configuration information, wherein the second configuration information is used to configure a target protocol layer for executing the data processing method in the terminal, and the target protocol layer is one or more of a PDCP layer, an RLC layer or a MAC layer.

12. A data processing apparatus, **characterized by** comprising: a memory, a transceiver and a processor; wherein,
the memory is configured to store a computer program;
the transceiver is configured to receive and transmit data under control of the processor;
the processor is configured to read the computer program stored in the memory and perform the following operations:
receiving, by a target protocol layer, a protocol data unit PDU from a lower layer;
if the number of lost PDUs in one or more associated PDUs is less than N, processing, by the target protocol layer, the associated PDUs to obtain corresponding service data units SDUs of the target protocol layer, and delivering, by the target protocol layer, the SDUs of the target protocol layer to an upper layer of the target protocol layer, wherein N is an integer greater than or equal to 1.

13. The apparatus according to claim 12, wherein,
the target protocol layer is a packet data convergence protocol PDCP layer, and the PDU is a PDCP PDU;
or, the target protocol layer is a radio link layer control protocol RLC layer, and the PDU is an RLC PDU;
or, the target protocol layer is a media access control MAC layer, and the PDU is a MAC PDU.

14. The apparatus according to claim 12, wherein the processor is configured to perform the following operations:
determining whether the one or more associated PDUs are lost according to indication information corresponding to the received PDU.

15. The apparatus according to claim 14, wherein the indication information comprises at least one of the following:
an identifier of a packet data unit set corresponding to the PDU;
an identifier of the PDU in a packet data unit set corresponding to the PDU;
identifiers of other packet data unit sets associated with a packet data unit set corresponding to the PDU;
a position of the PDU within a packet data unit set corresponding to the PDU; or
a position of the PDU within a plurality of packet data unit sets associated with a packet data unit set corresponding to the PDU.

16. The apparatus according to claim 14, wherein if the target protocol layer is a PDCP layer or an RLC layer, the indication information is carried in a PDU header or a payload of the PDU.

17. The apparatus according to claim 14, wherein if the target protocol layer is a MAC layer, the indication information is carried in downlink control information DCI, or the indication information is carried in a MAC control unit MAC CE in the PDU, or the indication information is carried in a sub-header of a sub-PDU in the PDU, or the indication information is carried in a payload of a sub-PDU in the PDU.

18. The apparatus according to claim 17, wherein the indication information is carried in the MAC CE in the PDU, and the MAC CE is carried in the PDU in a case that the PDU comprises data of a logical channel LCH carrying an XR service.

19. The apparatus according to claim 17, wherein the MAC CE is of a fixed length, and comprises identification information of one LCH and indication information corresponding to the LCH.

20. The apparatus according to claim 17, wherein the MAC CE is variable in length, and comprises identification information of a plurality of LCHs and indication information corresponding to each LCH in the plurality of LCHs.

21. The apparatus according to any one of claims 12 to 20, wherein the processor is configured to perform the following operations:
receiving first configuration information, wherein the first configuration information is used to configure whether to perform the operations in any one of claims 12 to 20, or the first configuration information is used to configure, based on an LCH, whether to perform the operations in any one of claims 12 to 20.

22. The apparatus according to claim 21, wherein the processor is configured to perform:
receiving second configuration information, wherein the second configuration information is used to configure a target protocol layer for performing the operations in any one of claims 12 to 20, and the target protocol layer is one or more of a PDCP layer, an RLC layer or a MAC layer.

23. A data processing apparatus, **characterized by** comprising:
a receiving unit, configured to receive a protocol data unit PDU from a lower layer by a target protocol layer;
a processing unit, configured to, if the number of lost PDUs in one or more associated PDUs is less than N, process the associated PDUs by the target protocol layer to obtain corresponding service data units SDUs of the target protocol layer, and deliver the SDUs of the target protocol layer to an upper layer of the target protocol layer, wherein N is an integer greater than or equal to 1.

24. The apparatus according to claim 23, wherein,
the target protocol layer is a packet data convergence protocol PDCP layer, and the PDU is a PDCP PDU;
or, the target protocol layer is a radio link layer control protocol RLC layer, and the PDU is an RLC PDU;
or, the target protocol layer is a media access control MAC layer, and the PDU is a MAC PDU.

25. The apparatus according to claim 23, wherein the processing unit is configured to:
determine whether the one or more associated PDUs are lost according to indication information corresponding to the received PDU.

26. The apparatus according to claim 25, wherein the indication information comprises at least one of the following:
an identifier of a packet data unit set corresponding to the PDU;
an identifier of the PDU in a packet data unit set corresponding to the PDU;
identifiers of other packet data unit sets associated with a packet data unit set corresponding to the PDU;
a position of the PDU within a packet data unit set corresponding to the PDU; or
a position of the PDU within a plurality of packet data unit sets associated with a packet data unit set corresponding to the PDU.

27. The apparatus according to claim 25, wherein if the target protocol layer is a PDCP layer or an RLC layer, the indication information is carried in a PDU header or a payload of the PDU.

28. The apparatus according to claim 25, wherein if the target protocol layer is a MAC layer, the indication information is carried in downlink control information DCI, or the indication information is carried in a MAC control unit MAC CE in the PDU, or the indication information is carried in a sub-header of a sub-PDU in the PDU, or the indication information is carried in a payload of a sub-PDU in the PDU.

29. The apparatus according to claim 28, wherein the indication information is carried in the MAC CE in the PDU, and the MAC CE is carried in the PDU in a case that the PDU comprises data of a logical channel LCH carrying an XR service.

30. The apparatus according to claim 28, wherein the MAC CE is of a fixed length, and comprises identification information of one LCH and indication information corresponding to the LCH.

31. The apparatus according to claim 28, wherein the MAC CE is variable in length, and comprises identification information of a plurality of LCHs and indication information corresponding to each LCH in the plurality of LCHs.

32. The apparatus according to any one of claims 23 to 31, wherein the receiving unit is configured to:
receive first configuration information, wherein the first configuration information is used to configure whether to perform the operations in any one of claims 12 to 20, or the first configuration information is used to configure, based on an LCH, whether to perform the operations in any one of claims 12 to 20.

33. The apparatus according to claim 32, wherein the receiving unit is configured to:
receive second configuration information, wherein the second configuration information is used to configure a target protocol layer for performing the operations in any one of claims 12 to 20, and the target protocol layer is one or more of a PDCP layer, an RLC layer or a MAC layer.

34. A computer-readable storage medium, wherein the computer-readable storage medium stores a computer program for causing a computer to execute the method according to any one of claims 1 to 11.
